# EUROPEAN PATENT SPECIFICATION

(11) **EP 4 552 120 B1**
(45) Date of publication and mention of the grant of the patent: **01.04.2026**
(21) Application number: 23790481.8
(22) Date of filing: 25.09.2023
(51) Int. Cl.: G10L 21/0208, G10L 25/60, G10L 25/30, G10L 25/69, H04M 3/22

(54) **SELECTIVE NOISE SUPPRESSION FOR SPEECH DATA IN DEVICE COMMUNICATION**
SELEKTIVE RAUSCHUNTERDRÜCKUNG FÜR SPRACHDATEN IN VORRICHTUNGSKOMMUNIKATION
SUPPRESSION SÉLECTIVE DE BRUIT POUR DES DONNÉES VOCALES DANS UNE COMMUNICATION ENTRE DISPOSITIFS

(43) Date of publication of application: 14.05.2025
(73) Proprietor: Google LLC, Mountain View, CA 94043 (US)
(72) Inventor: REDDY, Chandan K.A., Mountain View, California 94043 (US)
(74) Representative: Marks & Clerk GST
(86) International application number: PCT/US2023/033592
(87) International publication number: WO 2025/071542

(56) References cited:
- US-A1- 2013 304 461
- US-B1- 6 785 339

## Description

### BACKGROUND

Background noise suppression is often used in devices that output audio signals, such as phones, ear buds, hearing aids, smartwatches, etc. For example, noise suppression features deployed on such devices can receive speech input at a microphone, estimate particular frequencies at which background noise is present, reduce magnitudes of the audio at those frequencies in the speech data, and output resulting audio that has reduced noise. However, using noise suppression features on speech data may cause degradation in the quality of the speech data, due to processing of the speech data by components in a transmission chain.

US 6 785 339 B1 and US 2013/304461 A1 disclose examples of background noise suppression in a transmission chain.

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

### SUMMARY

The invention is defined by the independent claims. Preferred embodiments of the invention are defined by the dependent claims.

### BRIEF DESCRIPTION OF THE DRAWINGS

Fig. 1 is a block diagram of an example network environment which may be used for one or more implementations described herein.
Fig. 2 is a block diagram illustrating an example system to provide selective noise suppression for speech data at a device, according to some implementations.
Fig. 3 s a flow diagram illustrating an example method to provide selective noise suppression for speech data at a device, according to some implementations.
Fig. 4 is a block diagram of an example computing device which may be used to implement one or more features described herein.

### DETAILED DESCRIPTION

This disclosure relates to providing selective noise suppression for speech data in device communication, to enable improved speech quality and reduced power consumption by a device. A receiving device can receive speech data over a communication link from a transmitting device. The speech data is processed by one or more components of the transmitting device or the communication link. A quality of the speech data is determined using a speech quality predictor implemented on the receiving device. If the quality of the speech content is above a threshold quality (and/or one or more other conditions apply), then noise suppression for the speech data can be provided using a noise suppressor on the receiving device. If the quality of the speech content is below the threshold quality, then the noise suppression for the speech data is omitted. For example, if the quality of the speech content is above the threshold quality, a noise detector can be used to detect noise in the speech data, and if no noise is detected (e.g., noise below a noise threshold), the noise suppression for the speech data can be omitted.

Described features advantageously provide selective noise suppression in digital speech data for a device, allowing noise suppression to be omitted or bypassed when harmful to speech quality and/or unneeded to improve speech quality. For example, the noise suppression is omitted when it would further degrade speech data that already includes distortion. Furthermore, such noise suppression can be omitted when it may not be needed, e.g., if the speech data received by the device is of high quality and does not include significant noise. Thus, described features achieve improved speech quality and reduced power consumption at a device.

Received speech data may include distortion or noise that has been introduced by various processing of the speech data in the transmission or uplink path of the speech data. For example, noise suppression may be performed in a transmitting device to suppress background noise in speech data from a user that is transmitted to a receiving device, e.g., in a voice call or videoconference. Such noise suppression can improve the quality of perceived speech quality at the receiving device, but speech quality degradation may still occur, e.g., by artifacts that can be introduced by noise suppression. In addition, noise suppression models typically operate in a transmitting device, but additional noise suppression performed at the receiving device is in the downlink path and may cause further degradation of speech quality. For example, the noise suppression model at the receiving device may cut out some syllables if the input to the model has already been processed by an aggressive noise suppressor at the transmitter device. One reason for the further degradation is that machine learning based noise suppressors are conventionally trained on datasets that are representative of a path from a user to a transmitting device. Such noise suppressors are not designed to operate at a receiving device. Also, it is difficult to effectively train a noise suppressor used on a receiving device, due to the difficulty of creating training datasets that emulate the entire processing chain of the uplink path that processes speech data before being received by the receiving device. For example, the processing and components of the uplink processing chain may vary considerably based on different transmitting devices and networks used in communications with the receiving device.

Furthermore, processing from sources other than transmitter-side noise suppression may be performed on speech data in the transmitting device uplink path and in the transmission of the speech data over a communication link (e.g., a network). Components in the uplink transmission path such as gain control circuits, echo cancellation circuits, codecs, etc. may produce or magnify noise, distortion, or artifacts in speech data. In addition, the communication link and processing between transmitting and receiving device can introduce degradation in speech data, e.g., via packet loss and techniques such as jitter concealment, packet loss concealment, and stretching of data segments. Such degradation may cause noise suppression that is performed at a receiving device to further degrade the speech data.

In some examples, if noise suppression is used by a receiving device for received speech data, degradation can may occur that can significantly reduce the quality of the audio output by the receiving device based on the speech data. Such a device wastes processing and power resources by providing noise suppression when it can be harmful to speech quality.

Features described herein improve the use of noise suppression at a receiving device by selectively utilizing the noise suppression when it does not degrade the speech data. A speech quality predictor is used to determine when noise suppression can be omitted, e.g., by determining the quality of received speech data and detecting noise therein. Use of a noise suppressor is omitted when received speech data is detected as being sufficiently degraded, since noise suppression may further degrade such speech data. In addition, use of the noise suppression is omitted when received speech data has high quality and does not include significant noise, since such use of the noise suppressor is not needed and is wasteful of processing and power resources of the device.

Described techniques do not require knowledge of the processing, components, or algorithms used on the transmitting device, thus allowing use in any communication scenario or environment. Described techniques do not depend on creating a representative dataset of an entire uplink processing chain to train noise suppressors at the receiving device, which is difficult given the thousands of different communication devices available and processing chains that cannot be replicated accurately.

Furthermore, these techniques do not require significant processing and power resources; for example, the computational complexity of the speech quality predictor is much lower in comparison to that of noise suppression by a machine learning model. Thus, selectively omitting noise suppression results in significant reduction in processing and power consumption on the receiving device.

Technical advantages of described features thus include reduction of processing resources and consumption of power resources on a device, which is especially significant for devices operating with batteries or other limited power supply (e.g., many portable devices). Described features allow improvement of the quality of speech output by a device while keeping device power consumption low.

Further to the descriptions herein, a user may be provided with controls allowing the user to make an election as to both if and when systems, programs, or features described herein may enable collection of user information (e.g., information about a user's speech data as detected by a microphone, a user's context, a user's devices and device types, a user's preferences including for noise suppression and speech processing, a user's current location, or audio data), and if the user is sent content or communications from a server. In addition, certain data may be treated in one or more ways before it is stored or used, so that personally identifiable information is removed. For example, a user's identity may be treated so that no personally identifiable information can be determined for the user, or a user's geographic location may be generalized where location information is obtained (such as to a city, ZIP code, or state level), so that a particular location of a user cannot be determined. Thus, the user may have control over what information is collected about the user, how that information is used, and what information is provided to the user.

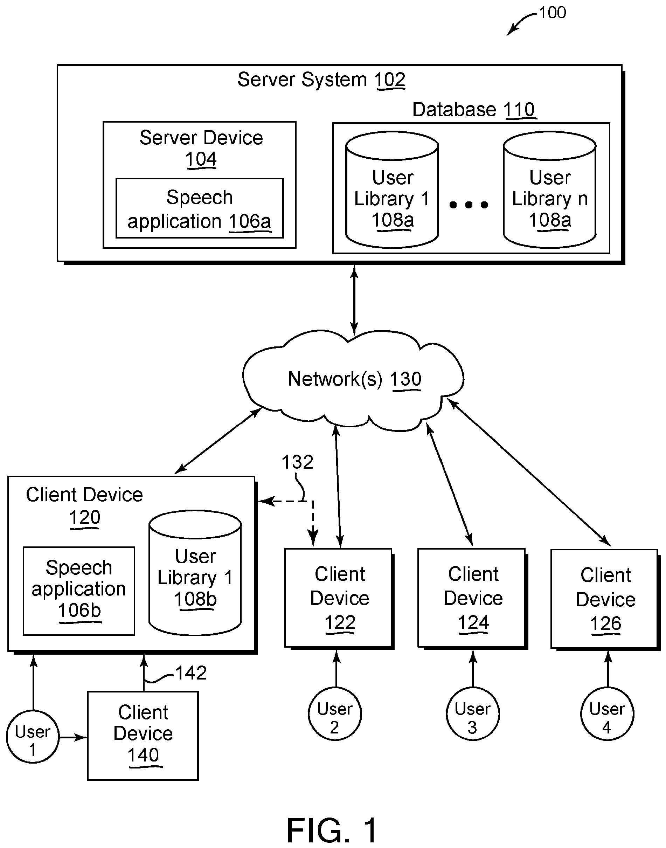

Fig. 1 illustrates a block diagram of an example network environment 100, in which some implementations described herein may be employed. Network environment 100 includes one or more server systems, e.g., server system 102 in the example of Fig. 1, and a plurality of client devices, e.g., client devices 120-126, each associated with a respective user of users U1-U4. Each of server system 102 and client devices 120-126 may be configured to communicate via a network 130.

Server system 102 can include a server device 104 and a database 110. In some implementations, server device 104 may provide speech application 106a. In Fig. 1 and the remaining figures, a letter after a reference number, e.g., "106a," represents a reference to the element having that particular reference number. A reference number in the text without a following letter, e.g., "106," represents a general reference to embodiments of the element bearing that reference number.

Database 110 may be stored on a storage device that is part of server system 102. In some implementations, database 110 may be implemented using a relational database, a key-value structure, or other type of database structure. In some implementations, database 110 may include a plurality of partitions, each corresponding to a respective library for each of users 1-4. For example, as seen in Fig. 1, database 110 may include a first library (user library 1, 108a) for user 1, and other libraries (user library 2, ..., user library n) for various other users. While Fig. 1 shows a single database 110, it may be understood that database 110 may be implemented as a distributed database, e.g., over a plurality of database servers. Further, while Fig. 1 shows a plurality of partitions, one for each user, in some implementations, each library may be implemented as a separate database.

Library 108a may store content data associated with user 1 (such as speech data, images, videos, etc.), metadata associated with the content data, and one or more other database fields, stored in association with the content data. Access permissions for library 108a may be restricted such that user 1 can control how content data in library 108a may be accessed, e.g., by application 106, by other applications, and/or by one or more other users. Server system 102 may be configured to implement the access permissions, such that data of a particular user is accessible only as permitted by the user.

Speech data as referred to herein includes digital data that has been converted from analog data captured by a microphone, where the analog data includes speech content spoken or otherwise emitted by a user and may include additional audio, such as background noise in the user's environment. In various implementations, speech data can be provided in any standardized audio file format. Noise or noise content are unwanted signals (e.g., audio that competes with information that the user wishes to transmit via speech) that may be present in captured speech data, such as background noise occurring while a user speaks into a microphone.

Network environment 100 can include one or more client devices, e.g., client devices 120, 122, 124, and 126, which may communicate with each other and/or with server system 102 via network 130. Network 130 can be any type of communication network, including one or more of the Internet, local area networks (LAN) such as WiFi networks, wide area networks (WAN) such as cellular networks, wireless networks, switch or hub connections, etc. In some implementations, network 130 can include peer-to-peer communication between devices, e.g., using peer-to-peer wireless protocols (e.g., Bluetooth^{®}, Wi-Fi Direct, etc.), etc. One example of peer-to-peer communication between two client devices 120 and 122 is shown by arrow 132.

In some example implementations, a supported client device 140 can communicate with one or more other client devices, such as client device 120 as shown in Fig. 1, using a communication link 142. In some implementations, link 142 can be similar to link 132. Supported client device 140 can be, for example, earbuds, headphones, smartwatch, or other device that can communicate data with client device 120. In some implementations, client device 140 and client device 120 can communicate via a protocol such as Bluetooth or similar communication protocols. Client device 120 can send data and commands to client device 140 over the communication link 142. Client device 140 can send speech data (e.g., based on captured user speech) and other data to client device 120, and client device 120 can process the data, send data to server system 102 and/or other client devices via network 130, etc.

In various implementations, users 1, 2, 3, and 4 may communicate with server system 102 and/or each other using respective client devices 120, 122, 124, 126 and 140. In some examples, users 1, 2, 3, and 4 may interact with each other via applications running on respective client devices and/or server system 102 and/or via a network service, e.g., a social network service or other type of network service, implemented on server system 102. For example, respective client devices 120, 122, 124, and 126 may communicate data to and from one or more server systems, e.g., server system 102.

In some implementations, the server system 102 may provide appropriate data to the client devices such that each client device can receive communicated content or shared content uploaded to the server system 102 and/or a network service. In some examples, users 1-4 can interact via audio or video conferencing, audio or image data sharing, audio, video, or text chat, or other communication modes or applications.

A network service implemented by server system 102 can include a system allowing users to perform a variety of communications, form links and associations, upload and post shared content such as images, text, audio, and other types of content, and/or perform other functions. For example, a client device can display or otherwise output received data such as content posts sent or streamed to the client device and originating from a different client device via a server and/or network service (or from the different client device directly), or originating from a server system and/or network service. In some implementations, client devices can communicate directly with each other, e.g., using peer-to-peer communications between client devices as described above. In some implementations, a "user" can include one or more programs or virtual entities, as well as persons that interface with the system or network.

In some implementations, any of client devices 120, 122, 124, and/or 126 can provide one or more applications. For example, as shown in Fig. 1, client device 120 may provide speech application 106b. Client devices 122-126 may also provide similar applications. Speech application 106a may be implemented using hardware and/or software of client device 120. In different implementations, speech application 106a may be a standalone client application, e.g., executed on any of client devices 120-124, or may work in conjunction with image application 106b provided on server system 102.

Speech application 106 may provide various features, implemented with user permission, that are related to speech data processing and/or output. For example, speech processing features provided by speech application 106 can include one or more of capturing speech from a user using one or more microphones, modifying the speech data (e.g., automatically and/or based on user input), storing speech data (with user permission and as specified in user settings) in a library 108 (e.g., as standalone audio files and/or included in video files or other types of data files), receiving and processing speech data, providing user interfaces to output and/or edit speech data, etc. In some implementations, speech application 106 includes additional features besides speech data processing functions. For example, a communications application (e.g., voice call application, chat application, videoconference application, etc.) can be considered a speech application that includes speech processing as well as processing of other types of data, e.g., text, images, video, etc.

In various implementations, with user permission, the features provided by speech application 106 may include programmatically analyzing speech data to determine audio features in the speech data (e.g., speech, noise, or other types of audio) using one or more user-permitted techniques such as voice recognition, etc. In some implementations, speech application 106 can generate one or more labels for each audio feature detected in speech data and store the labels in library 108. The labels for each speech data segment may be stored in association with the speech data segment in library 108. In some implementations, with user permission, speech application 106 may programmatically analyze speech data to generate related data and store such data in library 108. For example, speech application 106 can generate speech data transcriptions (e.g., using speech recognition).

Speech application 106 can generate enhanced (e.g., noise-suppressed) speech data from received speech data using one or more features described herein. For example, the noise-suppressed speech data can be output as audio by the device executing speech application 106, and/or can be transmitted to one or more other devices such as server system 102 (or other server system) or one or more client devices 120-126 and/or 140. Upon generating the noise-suppressed speech data, speech application 106 may update library 108 to store the generated speech data.

While the foregoing description refers to a variety of features of speech application 106, it will be understood that in various implementations, speech application 106 may provide fewer or more features. Further, each user is provided with options to enable and/or disable certain features.

Client device 120 may include a library 108b of user 1, which may be a standalone library. In some implementations, library 108b may be usable in combination with library 108a on server system 102. For example, with user permission, library 108a and library 108b may be synchronized via network 130. In some implementations, library 108 may include speech data segments (e.g., standalone audio files, audio included in video, etc.) associated with user 1, e.g., speech data capturing speech voiced by the user, speech data shared with the user 1 (e.g., from respective other client devices and/or libraries of other users 2-4), speech data downloaded by the user 1 (e.g., from websites, from messaging applications, etc.), and other speech data.

In some implementations, library 108b on client device 120 may include a subset of speech data that is stored by library 108a on server system 102. For example, such implementations may be advantageous when a limited amount of storage space is available on client device 120.

In different implementations, client device 120 and/or server system 102 may include other applications (not shown) that may be applications that provide various types of functionality, e.g., image capture and/or editing, calendar, address book, e-mail, web browser, shopping, transportation (e.g., taxi, train, airline reservations, etc.), entertainment (e.g., a music player, a video player, a gaming application, etc.), social networking (e.g., messaging or chat, audio/video calling, sharing images/ video, etc.) and so on. In some implementations, one or more of the other applications may be standalone applications that execute on client device 120. In some implementations, one or more of the other applications may access a server system, e.g., server system 102, that provides data and/or functionality of the other applications.

A user interface on a client device 120, 122, 124, 126 and/or 140 can enable the display of user content and other content, including audio content, images, video, text, and other content as well as communications, privacy settings, notifications, and other data. Such a user interface can be displayed using software on the client device, software on the server device, and/or a combination of client software and server software executing on server device 104, e.g., application software or client software in communication with server system 102. The user interface can be displayed by a display device of a client device or server device, e.g., a touchscreen or other display screen, projector, etc. In some implementations, application programs running on a server system can communicate with a client device to receive user input at the client device and to output data such as visual data, audio data, etc. at the client device.

For ease of illustration, Fig. 1 shows one block for server system 102, server device 104, database 110, and shows blocks for client devices 120, 122, 124, 126 and 140. Server blocks 102, 104, and 110 may represent multiple systems, server devices, and network databases, and the blocks can be provided in different configurations than shown. For example, server system 102 can represent multiple server systems that can communicate with other server systems via the network 130. In some implementations, server system 102 can include cloud hosting servers, for example. In some examples, database 110 may be stored on storage devices provided in server system block(s) that are separate from server device 104 and can communicate with server device 104 and other server systems via network 130.

Also, there may be any number of client devices. Each client device can be any type of electronic device, e.g., desktop computer, laptop computer, portable or mobile device, cell phone, smartphone, tablet computer, television, TV set top box or entertainment device, wearable devices (e.g., display glasses or goggles, earbuds or headphones, wristwatch, headset, armband, jewelry, etc.), personal digital assistant (PDA), media player, game device, etc. In some implementations, network environment 100 may not have all of the components shown and/or may have other elements including other types of elements instead of, or in addition to, those described herein.

Other implementations of features described herein can use any type of system and/or service. For example, any of various networked services (e.g., connected to the Internet) can be used. Any type of electronic device can make use of features described herein. Some implementations can provide one or more features described herein on one or more client or server devices disconnected from or intermittently connected to computer networks. In some examples, a client device including or connected to a display device can process speech data stored on storage devices local to the client device, e.g., received previously over communication networks.

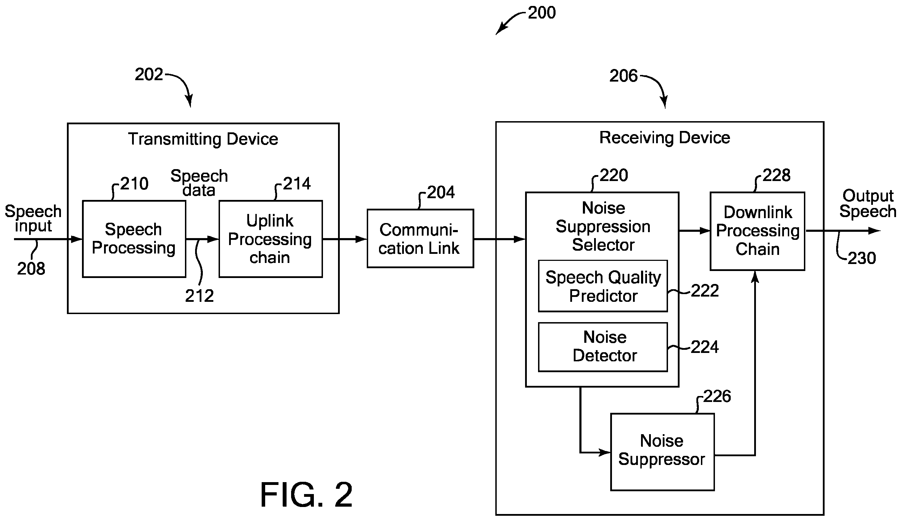

Fig. 2 is a block diagram illustrating a system 200 to provide selective noise suppression for speech data at a device, in accordance with some implementations. In some implementations, some or all of the system 200 can be implemented on one or more client devices 120, 122, 124, 126, or 140 as shown in Fig. 1. In some implementations, system 200 can be implemented on one or more server devices, e.g., server system 102 of Fig. 1. In some implementations, system 200 can be implemented on both server device(s) and client device (e.g., some components on a client device and some components on a server device). In some implementations, system 200 can be implemented by speech application 106 of Fig 1 and/or hardware components of a device executing speech application 106.

System 200 can include a transmitting device 202, a communication link 204 (e.g., communication network), and a receiving device 206. The devices 202 and 206 of Fig. 2 are shown in a particular scenario in which transmitting device 202 transmits data and receiving device 206 receives the data. In some implementations, transmitting device 202 can also be a receiving device when receiving data (e.g., receiving data transmitted from receiving device 206), and receiving device 206 can be a transmitting device when transmitting data (e.g., transmitting data to transmitting device 202). For example, transmitting device 202 can be a phone, smartwatch, earbud(s), desktop computer, laptop computer, tablet device, server, or any other device. Receiving device 202 can likewise be any of these types of devices.

In some example implementations, transmitting device 202 and receiving device 206 can be portable phone devices or similar devices that communicate over network 204 in a call (e.g., voice call, videoconference, etc.), where the transmitting device 202 receives speech from a first user and the transmitting device sends the corresponding speech data to the receiving device to be output and received by a second user of the receiving device. In another example, transmitting device 202 can be a supported client device such as earbuds, headphones, smartwatch, etc. that receives speech from a particular user, where the supported device 202 converts and sends corresponding speech data to the receiving device 206 which is a phone device, laptop, or other device being used by the same particular user, and the receiving device can send the speech data to another device (e.g., over a network), store the speech data, etc. In another example, transmitting device 202 can be device such as a phone, laptop computer, tablet device, etc. used by a particular user and receiving device 206 can be the supported client device that receives speech data from the transmitting device and converts it to audio data that is received by the same particular user who is using the supported device.

Transmitting device 202 receives audio speech input 208 from a user (or other source). For example, a user voices the speech during a voice call, videoconference, speech dictation, or other activity. Speech input 208 is received by a speech processing block 210, which can include one or more microphones to sense speech input 208 and/or other components to process the speech input and provide it as speech data 212 to other components in the transmitting device 202 such as uplink processing chain 214.

In many cases, speech input data 208 includes speech content as well as noise content contributed by background noise present when the speech was captured. For example, the background noise can be other speech from other users, sounds of objects moving or colliding, or any other sounds detected by the microphone while the user is speaking. In some implementations, the speech can be captured by the system 200 along with other user-permitted data such as video, images, motion or orientation, and/or other data using other sensors of the system such as cameras, motion sensors, etc.

In some implementations, speech input data 208 can be delineated into multiple segments, e.g., successive samples or time frames (e.g., in the time domain), where each frame is a portion of the speech input data and each frame spans the same amount of time. In some cases or implementations, speech data 212 can be received as audio data, e.g., an audio file can be received by system 200 that includes speech from a person that need not be the user of the device, e.g., a voice mail message or speech data in a video or voice call or message from another user that is stored or received on a device accessible to system 200.

Uplink processing chain 214 receives speech data 212 and performs various processing on the speech data. Several components can be included in the uplink processing chain to perform the processing.

In some implementations, uplink processing chain 214 can include an uplink noise suppressor that can process speech to remove background noise, e.g., transform noisy speech into clean speech. The uplink noise suppressor can use any signal processing based suppression techniques. In some examples, the uplink noise suppressor includes a machine learning model that has been trained on noisy speech, clean speech, and/or mixtures of noisy and clean speech and can detect and remove noise in speech data. For example, the uplink noise suppressor can estimate particular frequencies at which background noise is present, and reduce magnitudes of the audio at those frequencies in the speech data. In some implementations, the uplink noise suppressor can provide simple noise estimation and cancelling. In some cases or implementations, the uplink noise suppressor may introduce speech artifacts into the speech data.

Uplink processing chain 214 can include components that process the speech data for transmission, such as a gain control circuit, an echo cancellation circuit, a codec, etc. The gain control circuit can maintain a particular signal amplitude for the speech data at its output regardless of variation of the speech data signal amplitude at its input. The echo cancellation circuit can remove acoustic echo and/or line echo from speech data caused by acoustic properties of the physical area in which the speaker is located, and/or line echo produced by electrical properties in the communication link. The codec can compress and decompress the speech data (and other data), such as compressing the speech data for transmission to a different device over communication link 204. One or more of these components may introduce noise or other distortion and degradation to the speech data after the noise suppressor has processed the speech data.

In some implementations, transmitting device 202 can be a supported device, such as earbuds, headphones, smartwatch, etc., that communicates with receiving device 206 via a local communication link 204. The supported device can detect speech of the first user and send that speech over a communication link (e.g., link 142 of Fig. 1) to receiving device 206 used by the same user that uses the transmitting device, e.g., a phone, tablet, laptop, etc. In some examples, uplink processing chain 214 can include processing performed to the speech data 212 such as encoding and sending the speech data over the communication link, which can introduce distortion in the speech data.

Uplink processing chain 214 outputs the speech data 212 (e.g., in processed and/or compressed form) to communication link 204. Link 204 can be, for example, one or more communication networks such as network(s) 130 of Fig. 1, or a communication link such as link 132 or 142 between devices such as client devices, etc. In some implementations, link 204 can include one or more servers that receive the speech data, process the speech data, and route the speech data to receiving device 206.

Communication link 204 can perform various forms of processing to the speech data that may degrade its quality. For example, server(s) in the link 204 can perform processing such as jitter concealment and/or packet loss concealment. For example, long delays in packet reception from jitter and/or packet loss can cause calls to drop out or be choppy and incoherent. Jitter concealment and packet loss concealment can include predicting and adding data packets to speech data when the packets are late or missing, which degrades the quality of the speech data.

Another form of processing that can be performed by link 204 (e.g., by servers routing the speech data) is stretching of the speech data packets to fill in missing portions of data. This may cause speech data to distort, e.g., particular speech segments may be lengthened in time as perceived by a receiving user. In some implementations, noise suppression may also be performed on the server(s) in network 204, e.g., in a videoconference or audio call, which can be similar to the noise suppression provided in the transmitting device.

Receiving device 204 receives the speech data from communication link 204. Receiving device 204 can include a communication circuit that may include a noise suppression selector 220, a noise suppressor 226, and one or more components of a downlink processing chain 228.

Noise suppression selector 220 receives the speech data from link 204 and determines whether noise suppression is to be applied to the speech data, according to features described herein. In some implementations, noise suppression selector 220 can be implemented in the receiving device that is a cell phone, tablet, laptop computer, etc. In some implementations, noise suppression selector 220 can be implemented in a supported device such as headphones, earbuds, smartwatch, etc., that is associated with and communicates with a first device, both devices being used by the same user.

In some implementations, noise suppression selector 220 can include a speech quality predictor 222 and a noise detector 224. Speech quality predictor 222 can determine a quality of speech content of speech data received by predictor 222. In some implementations, speech quality predictor 222 determines speech quality of each segment (e.g., frame) of the received speech data. Predictor 222 can determine speech quality based on noise and/or other distortion, e.g., if there is high packet loss or degradation, and/or if there is background noise in the speech data.

In some implementations, the speech quality predictor can include a machine learning model that determines speech quality based on the content of the speech data. In some examples, a speech quality predictor such as DNSMOS (Deep Noise Suppression Mean Opinion Score) or similar machine learning predictors can be used. For example, machine learning predictors can be trained on training data that includes human evaluations of speech quality, and/or may be trained on training data that includes use of objective speech quality metrics.

In some implementations, the machine learning model can provide a detected speech quality level of the input speech data as a numerical rating or other indication of speech quality. According to the invention, higher speech quality indicates less noise and/or other distortion present in the speech data and lower speech quality indicates more noise and/or other distortion present in the speech data. The rating can be an indication of noise and distortion magnitude in a segment of the speech data. For example, the speech quality predictor can provide a particular rating within a range of multiple ratings that indicate low quality speech to high quality speech. In some implementations, the range of multiple numerical ratings includes a scale of three or more ratings or levels, e.g., a scale of 1 to 5, 1 to 10, 0 to 1, etc. For example, such a speech quality predictor can require less processing resources of the receiving device to implement than a noise suppressor machine learning model.

In some implementations, one or more statistical predictors and/or rule-based predictors can be used in the speech quality predictor 222 instead of or in addition to a machine learning model predictor. Statistical predictors can, for example, determine speech signals and noise signals and determine an estimation of the quality of speech. In some examples, a statistical predictor or rule-based predictor can use objective speech quality metrics to determine speech quality and/or can determine the amount of background noise that is present in the speech data. For example, the perceptual evaluation of speech quality (PESQ) technique can be used, in which a reference signal and the speech data signal are processed through an auditory transform, and parameters extracted from the difference between the transforms of the signals are aggregated in frequency and time and are mapped to a prediction of subjective mean opinion score (MOS). Other objective speech quality metrics can also or alternatively be used. The statistical or rules-based predictor can assign a rating to speech in the speech data in a particular scale (e.g., 0 to 1, 1 to 5, 1 to 10, etc.).

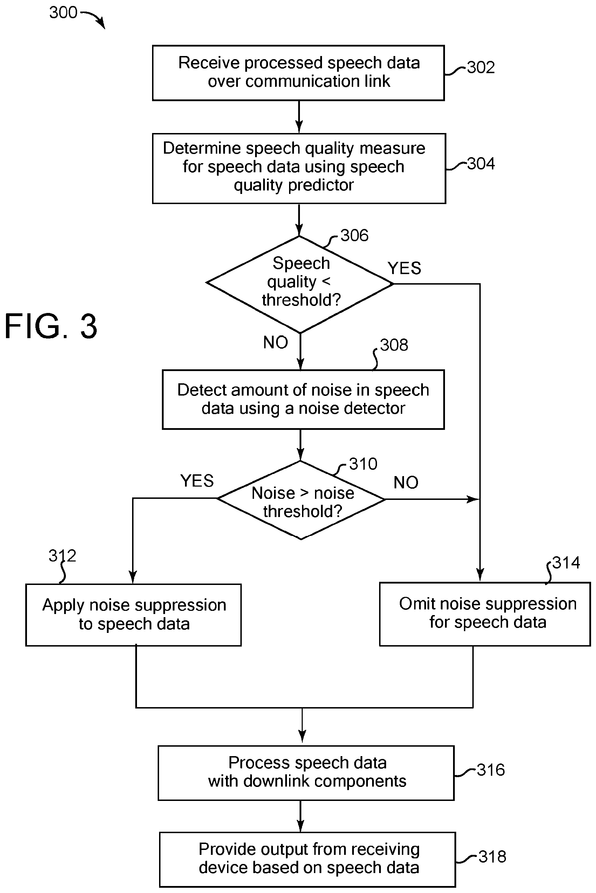

Noise detector 224 can be used in some cases to detect an amount of noise in the speech data. For example, noise detector 224 can be used if the speech data is determined to have sufficiently high speech quality as described with reference to Fig. 3. In some implementations, noise detector 224 can include a voice activity detector that determines whether a voice is present in each segment of the speech data. Any of various voice activity detection techniques can be used. The noise detector can determine the energy in the signal in the segments of speech data in which no voice is detected, to determine if there is background noise present in those samples. For example, the detector can examine changes in the envelope or amplitude of the speech signal; if the detected amplitude or energy is above a certain noise threshold, then noise can be considered to be present in the segment of speech data, and if the detected amplitude or energy is below the noise threshold, noise can be considered to be absent. Any of various types of noise detectors can be used.

Any of various types of noise detectors can be used to detect noise, e.g., to detect whether a voice is present in the speech data and whether there is noise in non-voice portions of the speech data. For example, statistical classifiers and/or heuristic or rule-based classifiers can be used to determine the amount of background noise present in the speech data, e.g., by detecting signal processing-based features that approximate the magnitude of noise in speech data segments. Such features can include spectral audio features extracted from the speech data, such as spectral centroid, spectral bandwidth, spectral contrast, spectral rolloff, tonal centroid features, zero-crossing rate, etc. For example, linear classifiers can be used that assign scores to each of the classifications and can weight different features such as magnitude of detected noise, rate of change of noise, etc. In some implementations, a machine learning model noise detector can also or alternatively be used to detect noise, e.g., which has been trained on clean and noisy speech data. Such noise detectors can require less processing resources of the receiving device to implement than a noise suppressor machine learning model.

If the noise suppression selector 220 determines that noise in the speech data should be suppressed, the speech data is sent to noise suppressor 226 to remove background noise in the speech data. In some implementations, noise suppressor 226 can be similar to the noise suppressor that can be used in the transmitting device as described above in uplink processing chain 214 to transform noisy speech into clean speech. In some implementations, the noise suppressor includes a machine learning model that has been trained on noisy speech, clean speech, and/or mixtures of noisy and clean speech and can reduce magnitudes of the audio in the speech data at particular frequencies in the speech data in which noise is detected. The training data used to train the model of noise suppressor 226 on receiving device 206 does not typically take into account uplink processing chain 214 of the transmitting device 202 and network processing and transmission in communication link 204, and thus noise suppressor 226 may be advantageously bypassed when noise suppression selector 220 determines to do so based on the quality and noise of the speech data.

Downlink processing chain 228 receives speech data from noise suppression selector 220 or noise suppressor 226. For example, speech data that includes receiver noise suppression is received from noise suppressor 226, and speech data that does not include such noise suppression can be received from noise suppression selector 220. Downlink processing chain 228 can include one or more components that process the speech data for output as audio or for further transmission and/or storage. For example, chain 228 can include an automatic gain control circuit (e.g., an equalizer to increase amplitudes if below a threshold). If a supported device such as headphones, earbuds, smartwatch, etc. are connected to the receiving device and being used to output the speech data as audio, a codec in the downlink processing chain 228 can be used to convert the speech data to a particular protocol for the supported device. In some implementations, the converted speech data can be wirelessly transmitted to the supported device, and this transmission can be considered as part of downlink processing chain 228. For example, the supported device can provide processing of the speech data including decoding by a decoder, equalizing by an equalizer, and conversion to an analog signal by an digital analog converter for output. Components in the downlink processing chain typically do not add significant distortion to the speech data.

Downlink processing chain 228 outputs a speech signal 230 that can be output as audio to a user of the receiving device 206. Output speech signal 230 may have reduced noise and distortion based on the processing of the transmitting and receiving device as described above. For example, output speech signal 230 can be transmitted to components of system 200 for audio output via speakers or other audio output devices, and/or can be transmitted (e.g., via a communication link) to one or more other devices for audio output. In further examples, the output speech signal can be output for storage in a storage device.

In some implementations, noise suppression components (hardware and/or software) may be included in multiple components or devices in an uplink processing chain or downlink processing chain. In some implementations, if noise suppression is performed and the noise suppression detector 220 determines that further noise suppression should be omitted (as described herein), a message or flag can be sent to other noise suppressors further along a processing chain to instruct those suppressors to omit performing noise suppression, thus avoiding further distortion in the speech data and/or wasteful power consumption. For example, noise suppression detector 220 in a supported device such as earbuds, headphones, smartwatch, etc. can communicate with an associated device such as a cellphone or laptop computer to instruct noise suppression to be omitted on that associated device, or this communication can be performed from a device to a supported device.

FIG. 3 is a flow diagram illustrating an example method 300 to provide selective noise suppression for speech data at a device, according to some implementations. In some implementations, method 300 can be implemented, for example, by one or more client devices 120, 122, 124, 126, or 140 as shown in Fig. 1. In some implementations, some or all of the method 300 can be implemented on one or more server systems 102 as shown in Fig. 1, and/or on both server device(s) and client device(s). In described examples, the implementing system includes one or more digital processors or processing circuitry ("processors"), and one or more storage devices (e.g., a database or other storage). In some implementations, different components of one or more servers and/or clients can perform different blocks or other parts of the method 300. Some implementations can have one or more blocks of method 300 performed by one or more other devices (e.g., other client devices or server devices) that can send results or data to a first device that performs other blocks.

In some implementations, the method 300, or portions of the method, can be initiated automatically by a system. For example, the method (or portions thereof) can be performed based on one or more particular events or conditions, e.g., reception of speech data by a device, and/or one or more other conditions occurring which can be specified in device settings.

Blocks of method 300 are only performed if permission is obtained by a user of the device performing the method 300.

Method 300 may begin at block 302. In block 302, processed speech data is received by a device over a communication link. For example, the device can be a receiving device that is receiving the speech data while in a call with a transmitting device, where the speech data includes speech content sampled from speech of a user of the transmitting device. The speech data can be in the time domain and can be one segment (e.g., frame) of multiple segments of the speech data that, e.g., are successively received and processed by the device via multiple iterations of method 300. The speech data is received over a communication link, which can be part of a communication network, e.g., network 130 of Fig. 1 or a link 132 or 142. The received speech data has been processed by one or more components in the transmitting device and/or the communication link, and may include distortion from this processing. Block 302 may be followed by block 304.

In block 304, a speech quality measure is determined for the speech data using a speech quality predictor. For example, speech quality predictor 222 of Fig. 2 can be used, which can determine a numerical rating or other indication of speech quality based on noise, distortion, etc. in the speech data. For example, a numerical rating within a particular range, such as 1 to 5, can be provided, where a rating of 5 indicates a highest level of speech quality found in the speech data. Other types of speech quality predictors can be used in other implementations, e.g., that provide a similar rating indicating a level of quality within a range of multiple levels of quality. Block 304 may be followed by block 306.

In block 306, it is determined whether the speech quality measure from the speech quality predictor of block 304 is less than a threshold quality. For example, the threshold quality can be in a lower portion of the range of quality ratings provided by the speech quality predictor. For example, if the range of numerical quality ratings is 1 to 5, the clean threshold can be set (e.g., to 2.5) so that ratings of 1 or 2 qualify for a positive result in block 306. Thus, block 306 determines whether the speech data is low quality speech data (e.g., that includes distortion, cut outs in speech, etc.) based on the threshold.

If the speech quality measure is less than the threshold quality, then the method continues to block 314, described below. If the speech quality measure is greater than the threshold quality, then the method continues to block 308. This enables speech data that rates a medium or higher quality score to be analyzed for noise.

In block 308, an amount of noise is detected in the speech data using a noise detector. For example, noise detector 224 of Fig. 2 can be used, which can detect whether a threshold amount of noise is present in the speech data. Block 308 may be followed by block 310.

In block 310, it is determined whether the noise detected by the noise detector is greater than a noise threshold. For example, the noise threshold can be a threshold that indicates whether noise is present in speech data, e.g., if the energy of the speech signal is above the threshold. If the detected noise is less than the noise threshold, then the method continues to block 314, described below. If the detected noise is greater than the noise threshold, then the method continues to block 312.

In block 312, noise suppression is applied to the speech data. For example, noise suppressor 226 of Fig. 2 can be used, which can suppress noise in the speech data, e.g., using a machine learning model that has been trained using noisy speech, clean speech etc. Block 312 may be followed by block 316, described below.

In block 314, noise suppression is omitted for the speech data. For example, the speech data can be sent from the noise suppression selector 220 to the downlink processing chain 228 of Fig. 2, without performing additional noise suppression (e.g., without sending the speed data to the noise suppressor 226 of Fig. 2). Block 314 may be followed by block 316.

In block 316, the speech data is processed with downlink components of a downlink processing chain of the receiving device (and/or other devices). For example, the speech data that is processed in block 316 can be noise-suppressed speech data that has be processed by noise suppressor 226, or speech data received from noise suppression selector 220 that has not been noise-suppressed by noise suppressor 226. For example, the processing chain can be downlink processing chain 228 of Fig. 2, which may include, for example, automatic gain control, processing for transmission to a supported device, etc. Block 316 may be followed by block 318.

In block 318, an output speech signal is output by the receiving device based on the speech data. For example, a speech signal based on the speech data can be transmitted to a hardware interface of a system (e.g., system 200) that performs method 300, for audio output via speakers or other audio output devices. In some implementations, the output speech signal can be the speech data that is provided to a different device (e.g., over a communication link) to be output as an audio signal, and/or can be output to a storage device on the device performing method 300 or provided to a different device for storage.

In some implementations, the speech data processed in method 300 can be one segment (e.g., frame) of multiple segments of the speech data, where the segments can be successively received and processed (or received and processed at least partially in parallel) by the device via multiple iterations of method 300.

The output speech signal has reduced noise and distortion based on the processing of the transmitting and receiving device as described above. Method 300 allows intelligent bypass of a noise suppressor in a receiving device if there is a potential to introduce additional speech distortion or if the speech data received at the receiving device is already of high quality. These features reduce power consumption of the receiving device by not running the noise suppression model at the receiving device when there is no significant noise or distortion from the transmitting device or transmission process.

Described features can be used to select use of any noise suppressor that has a preprocessing chain, e.g., in a transmitting device and/or communication link.

In some implementations, two or more quality thresholds can be used by the noise suppression selector 220 and in method 300. For example, an upper threshold can be in an upper portion of the range of quality ratings provided by the speech quality predictor, and a lower threshold can be in a lower portion. For example, if the range of numerical quality ratings is 1 to 5, the upper threshold can be set (e.g., at 3.5 or 4) so that ratings of 4 or 5 qualify as high quality speech data, and the lower threshold can be the quality threshold described above (e.g., 2 or 2.5) in which ratings of 1 or 2 qualify as low quality speech data. In some implementations, the upper threshold can be used to classify high quality speech data that can be processed differently than speech data having middle quality (e.g., a quality measure that is above the lower threshold and below the upper threshold). For example, if speed data is evaluated to have a speech quality measure above the upper threshold, noise detection of block 308 can be omitted and block 316 can be performed to omit noise suppression, or the noise detection of block 308 can use techniques for high quality speech data that is less robust and faster to process than noise detection techniques used for middle-quality speech data.

In various implementations, various blocks of method 300 may be combined, split into multiple blocks, performed in parallel, or performed asynchronously. In some implementations, one or more blocks of method 300 may not be performed or may be performed in a different order than shown in Fig. 3. Method 300, or portions thereof, may be repeated any number of times using additional inputs, e.g., additional speech data is received.

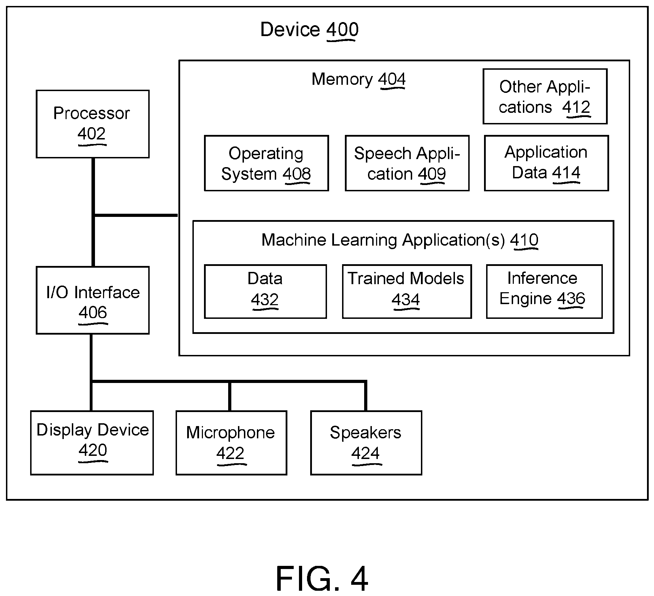

Fig. 4 is a block diagram of an example device 400 which may be used to implement one or more features described herein. In some examples, device 400 may be used to implement a client device, e.g., any of client devices 120-126 and 140 shown in Fig. 1. The device 400 may for example be advantageously embodied in a battery powered client device, such as a smartphone, personal computer, headphones, or PDA, including a battery (not shown) and a communication circuit or circuitry (some examples shown in Fig. 2), to provide selective noise suppression in real time with reduced power consumption for increased battery life of the device. The device 400 can be a self-contained client device in the sense of providing noise suppression for its embedded audio system, or device 400 may be used with a connected (wired or wireless) supported client device, such as earbuds or a smartwatch, e.g., to provide noise suppression for the supported device's audio system. Alternatively, device 400 can implement a server device, e.g., server device 104, that can provide noise suppression more efficiently, reducing power consumption and heat generation in the server. In some implementations, device 400 may be used to implement a client device, a server device, or both client and server devices. Device 400 can be any suitable computer system, server, or other electronic or hardware device as described above.

One or more methods described herein can operate in several environments and platforms, e.g., as a standalone computer program that can be executed on any type of computing device, a mobile application ("app") run on a mobile computing device (e.g., cell phone, smart phone, tablet computer, wearable device (wristwatch, armband, jewelry, headwear, virtual reality goggles or glasses, augmented reality goggles or glasses, head mounted display, etc.), laptop computer, etc.), a program run on a web browser, etc. In one example, all computations can be performed within the mobile app (and/or other apps) on the mobile computing device. In another example, a client/server architecture can be used, e.g., a mobile computing device (as a client device) sends user input data to a server device and receives from the server the final output data (e.g., audio data to be output by speakers of the client device). In another example, computations can be split between the mobile computing device and one or more server devices.

In some implementations, device 400 includes a processor 402, a memory 404, and input/output (I/O) interface 406. Processor 402 can be one or more processors and/or processing circuits to execute program code and control basic operations of the device 400. A "processor" includes any suitable hardware system, mechanism or component that processes data, signals or other information. A processor may include a system with a general-purpose central processing unit (CPU) with one or more cores (e.g., in a single-core, dual-core, or multicore configuration), multiple processing units (e.g., in a multiprocessor configuration), a graphics processing unit (GPU), a field-programmable gate array (FPGA), an application-specific integrated circuit (ASIC), a complex programmable logic device (CPLD), dedicated circuitry for achieving functionality, a special-purpose processor to implement neural network model-based processing, neural circuits, processors optimized for matrix computations (e.g., matrix multiplication), or other systems. In some implementations, processor 402 may include one or more co-processors that implement neural-network processing. In some implementations, processor 402 may be a processor that processes data to produce probabilistic output, e.g., the output produced by processor 402 may be imprecise or may be accurate within a range from an expected output. Processing need not be limited to a particular geographic location, or have temporal limitations. For example, a processor may perform its functions in "real-time," "offline," in a "batch mode," etc. Portions of processing may be performed at different times and at different locations, by different (or the same) processing systems. A computer may be any processor in communication with a memory.

Memory 404 is typically provided in device 400 for access by the processor 402, and may be any suitable processor-readable storage medium, such as random access memory (RAM), read-only memory (ROM), Electrical Erasable Read-only Memory (EEPROM), Flash memory, etc., suitable for storing instructions for execution by the processor, and located separate from processor 402 and/or integrated therewith. Memory 404 can store software operating on the server device 400 by the processor 402, including an operating system 408, speech application 409 (e.g., which may be the same as speech application 106 of Fig. 1), machine learning application(s) 410 (which may be included in a noise suppression selector and/or noise suppressor as described herein), other applications 412, and application data 414. Other applications 412 may include applications such as a data display engine, image editing applications, image display engine, notification engine, social networking engine, media display applications, communication applications, web hosting engines or applications, media sharing applications, etc. In some implementations, speech application 409 and/or machine learning application(s) 410 can include instructions that enable processor 402 to perform functions described herein, e.g., some or all of blocks of system 200 of Fig. 2 and/or method 300 of Fig. 3. In some implementations, speech data received from users or other devices can be stored as application data 414 or other data in memory 404, and/or on other storage devices of one or more other devices in communication with device 400.

Any of software in memory 404 can alternatively be stored on any other suitable storage location or computer-readable medium. In addition, memory 404 (and/or other connected storage device(s)) can store one or more messages, user preferences, one or more taxonomies, electronic encyclopedia, dictionaries, digital maps, knowledge bases, grammars, and/or instructions and data used in the features described herein. Memory 404 and any other type of storage (magnetic disk, optical disk, magnetic tape, or other tangible media) can be considered "storage" or "storage devices."

I/O interface 406 can provide functions to enable interfacing device 400 with other systems and devices. Interfaced devices can be included as part of the device 400 or can be separate and communicate with the device 400. For example, network communication devices, storage devices (e.g., memory and/or database), and input/output devices can communicate via I/O interface 406. In some implementations, the I/O interface can connect to interface devices such as input devices (keyboard, pointing device, touchscreen, microphone, camera, scanner, sensors, etc.) and/or output devices (display devices, speaker devices, printers, motors, etc.). In some implementations, hardware used for components of system 200 of Fig. 2 can be included in I/O interface or other connected components of device 400.

Some examples of interfaced devices that can connect to I/O interface 406 can include one or more microphones 422 that can be used to capture speech and other audio such that the speech and audio can be converted to speech data and other audio data by the I/O interface 406 and other components of device 400. Microphones 422 can be connected to device 400 via local connections and/or via networked connections. One or more speakers 424 can output audio based on speech signals derived from speech data. One or more display devices 420 can be used to display content, e.g., images, video, and/or a user interface of an application. Display device 420 can be connected to device 400 via local connections (e.g., display bus) and/or via networked connections and can be any suitable display device. Display device 420 can include any suitable display device such as an LCD, LED, or plasma display screen, CRT, television, monitor, touchscreen, 3-D display screen, or other visual display device. Display device 420 may also act as an input device, e.g., a touchscreen input device. For example, display device 420 can be a flat display screen provided on a mobile device, multiple display screens provided in glasses or a headset device, or a monitor screen for a computer device.

The I/O interface 406 can interface to other input and output devices. Some examples include one or more cameras which can capture images and/or detect gestures. Other input and output devices can include radar sensor or other sensors for detecting gestures, global positioning sensors, etc.

In various implementations, machine learning application 410 may utilize Bayesian classifiers, support vector machines, neural networks, or other learning features and techniques. In some implementations, machine learning application 410 may include a trained model 434, an inference engine 436, and data 432. In some implementations, data 432 may include training data, e.g., data used to generate trained model(s) 434. For example, training data may include any type of data such as text, images, audio (e.g., speech samples, noise samples, and/or noisy speech samples), video, etc.

Training data may be obtained from any source, e.g., a data repository specifically marked for training, data for which permission is provided for use as training data for machine-learning, etc. In implementations where one or more users permit use of their respective user data to train a machine-learning model, e.g., trained model 434, training data may include such user data. In implementations where users permit use of their respective user data, data 432 may include permitted data such as speech data (or other user-generated audio data).

In some implementations, training data may include synthetic data generated for the purpose of training, such as data that is not based on user input or activity in the context that is being trained, e.g., data generated from simulated speech, speech synthesis, or other computer-generated audio data. In some implementations, machine learning application 410 excludes data 432. For example, in these implementations, the trained model 434 may be generated, e.g., on a different device, and be provided as part of machine learning application 410. In various implementations, the trained model 434 may be provided as a data file that includes a model structure or form, and associated weights. Inference engine 436 may read the data file for trained model 434 and implement a neural network with node connectivity, layers, and weights based on the model structure or form specified in trained model 434.

In some implementations, a trained model 434 may include one or more model forms or structures. For example, model forms or structures can include any type of neural-network, such as a linear network, a deep neural network that implements a plurality of layers (e.g., "hidden layers" between an input layer and an output layer, with each layer being a linear network), a convolutional neural network (e.g., a network that splits or partitions input data into multiple parts or tiles, processes each tile separately using one or more neural-network layers, and aggregates the results from the processing of each tile), a long short term memory (LTSM) network, a sequence-to-sequence neural network (e.g., a network that takes as input sequential data, such as words in a sentence, frames in a video, etc. and produces as output a result sequence), etc. The model form or structure may specify connectivity between various nodes and organization of nodes into layers.

For example, the nodes of a first layer (e.g., input layer) may receive data as input data 432 or application data 414. Subsequent intermediate layers may receive as input output of nodes of a previous layer per the connectivity specified in the model form or structure. These layers may also be referred to as hidden layers or latent layers. A final layer (e.g., output layer) produces an output of the machine learning application. For example, the output may be a speech quality classification and/or noise detection classification for input speech data as described herein, speech data having noise suppressed, etc. In some implementations, model form or structure also specifies a number and/ or type of nodes in each layer.

In different implementations, trained model 434 can include a plurality of nodes, arranged into layers per the model structure or form. In some implementations, the nodes may be computational nodes with no memory, e.g., configured to process one unit of input to produce one unit of output. Computation performed by a node may include, for example, multiplying each of a plurality of node inputs by a weight, obtaining a weighted sum, and adjusting the weighted sum with a bias or intercept value to produce the node output. In some implementations, the computation performed by a node may also include applying a step/activation function to the adjusted weighted sum. In some implementations, the step/activation function may be a nonlinear function. In various implementations, such computation may include operations such as matrix multiplication. In some implementations, computations by the plurality of nodes may be performed in parallel, e.g., using multiple processors cores of a multicore processor, using individual processing units of a GPU, or special-purpose neural circuitry. In some implementations, nodes may include memory, e.g., may be able to store and use one or more earlier inputs in processing a subsequent input. For example, nodes with memory may include long short-term memory (LSTM) nodes. LSTM nodes may use the memory to maintain "state" that permits the node to act like a finite state machine (FSM). Models with such nodes may be useful in processing sequential data, e.g., words in a sentence or a paragraph, frames in speech or other audio, etc.

In some implementations, a trained model 434 may include embeddings or weights for individual nodes. For example, a model may be initiated as a plurality of nodes organized into layers as specified by the model form or structure. At initialization, a respective weight may be applied to a connection between each pair of nodes that are connected per the model form, e.g., nodes in successive layers of the neural network. For example, the respective weights may be randomly assigned, or initialized to default values. The model may then be trained, e.g., using data 432, to produce a result.

For example, training may include applying supervised learning techniques. In supervised learning, the training data can include a plurality of inputs (e.g., a set of speech data frames or samples) and a corresponding expected output for each input (e.g., a set of groundtruth labels indicating noise classification in each speech frame or sample in the set of speech frames or samples). Based on a comparison of the output of the model with the expected output, values of the weights are automatically adjusted, e.g., in a manner that increases a probability that the model produces the expected output when provided similar input.

Machine learning application 410 also includes an inference engine 436. Inference engine 436 is configured to apply the trained model 434 to data, such as application data 414, to provide an inference. In some implementations, inference engine 436 may include software code to be executed by processor 402. In some implementations, inference engine 436 may specify circuit configuration (e.g., for a programmable processor, for a field programmable gate array (FPGA), etc.) enabling processor 402 to apply the trained model. In some implementations, inference engine 436 may include software instructions, hardware instructions, or a combination. In some implementations, inference engine 436 may offer an application programming interface (API) that can be used by operating system 410 and/or other applications 412 to invoke inference engine 436, e.g., to apply trained model 434 to application data 414 to generate an inference. For example, the inference for a speech quality predictor model may be a speech quality classification for a segment (e.g., frame) of speech data.

Machine learning application(s) 410 may provide several technical advantages. For example, when trained model 434 is generated based on unsupervised learning, trained model 434 can be applied by inference engine 436 to produce knowledge representations (e.g., numeric representations) from input data, e.g., application data 414. For example, a model trained for speech analysis may produce representations of speech that have a smaller data size than input speech data. In some implementations, such representations may be helpful to reduce processing cost (e.g., computational cost, memory usage, etc.) to generate an output (e.g., a label, a classification, etc.). In some implementations, such representations may be provided as input to a different machine learning application that produces output from the output of inference engine 436. In some implementations, knowledge representations generated by machine learning application 410 may be provided to a different device that conducts further processing, e.g., over a network. In such implementations, providing the knowledge representations rather than the speech data may provide a technical benefit, e.g., enable faster data transmission with reduced cost.

In some implementations, a machine learning application 410 may be implemented in an offline manner. In these implementations, trained model 434 may be generated in a first stage, and provided as part of machine learning application 410. In some implementations, machine learning application 410 may be implemented in an online manner. For example, in such implementations, an application that invokes machine learning application 410 (e.g., operating system 410, speech application 409, or one or more of other applications 412) may utilize an inference produced by machine learning application 410, e.g., provide the inference to a user, and may generate system logs (e.g., if permitted by the user, an action taken by the user based on the inference; or if utilized as input for further processing, a result of the further processing). System logs may be produced periodically, e.g., hourly, monthly, quarterly, etc. and may be used, with user permission, to update trained model 434, e.g., to update embeddings for trained model 434.

In some implementations, machine learning application 410 may be implemented in a manner that can adapt to particular configuration of device 400 on which the machine learning application 410 is executed. For example, machine learning application 410 may determine a computational graph that utilizes available computational resources, e.g., processor 402. For example, if machine learning application 410 is implemented as a distributed application on multiple devices, machine learning application 410 may determine computations to be carried out on individual devices in a manner that optimizes computation. In another example, machine learning application 410 may determine that processor 402 includes a GPU with a particular number of GPU cores (e.g., 1000) and implement the inference engine accordingly (e.g., as 1000 individual processes or threads).

In some implementations, machine learning application 410 may implement an ensemble of trained models. For example, trained model 434 may include a plurality of trained models that are each applicable to the same input data. In these implementations, machine learning application 410 may choose a particular trained model, e.g., based on available computational resources, success rate with prior inferences, etc. In some implementations, machine learning application 410 may execute inference engine 436 such that a plurality of trained models is applied. In these implementations, machine learning application 410 may combine outputs from applying individual models, e.g., using a voting-technique that scores individual outputs from applying each trained model, or by choosing one or more particular outputs. Further, in these implementations, machine learning application 410 may apply a time threshold for applying individual trained models (e.g., 0.5 ms) and utilize only those individual outputs that are available within the time threshold. Outputs that are not received within the time threshold may not be utilized, e.g., discarded. For example, such approaches may be suitable when there is a time limit specified while invoking the machine learning application, e.g., by operating system 410 or one or more applications 412.

In different implementations, machine learning application 410 can produce different types of outputs. For example, machine learning application 410 can provide representations or clusters (e.g., numeric representations of input data), speech data (e.g., with noise or without), etc. In some implementations, machine learning application 410 may produce an output based on a format specified by an invoking application, e.g., operating system 410 or one or more applications 412. In some implementations, an invoking application may be another machine learning application. For example, such configurations may be used in generative adversarial networks, where an invoking machine learning application is trained using output from machine learning application 410 and vice-versa.

Any of software in memory 404 can alternatively be stored on any other suitable storage location or computer-readable medium. Memory 404 and any other type of storage (magnetic disk, optical disk, magnetic tape, or other tangible media) can be considered "storage" or "storage devices."

For ease of illustration, Fig. 4 shows one block for each of processor 402, memory 404, I/O interface 406, and software blocks 408-414 and 432-436. These blocks may represent one or more processors or processing circuitries, operating systems, memories, I/O interfaces, applications, and/or software modules. In other implementations, device 400 may not have all of the components shown and/or may have other elements including other types of elements instead of, or in addition to, those shown herein. While some components are described as performing blocks and operations as described in some implementations herein, any suitable component or combination of components of environment 100, device 400, similar systems, or any suitable processor or processors associated with such a system, may perform the blocks and operations described.

Methods described herein can be implemented by computer program instructions or code, which can be executed on a computer. For example, the code can be implemented by one or more digital processors (e.g., microprocessors or other processing circuitry) and can be stored on a computer program product including a non-transitory computer-readable medium (e.g., storage medium), such as a magnetic, optical, electromagnetic, or semiconductor storage medium, including semiconductor or solid state memory, magnetic tape, a removable computer diskette, a random access memory (RAM), a read-only memory (ROM), flash memory, a rigid magnetic disk, an optical disk, a solid-state memory drive, etc. The program instructions can also be contained in, and provided as, an electronic signal, for example in the form of software as a service (SaaS) delivered from a server (e.g., a distributed system and/or a cloud computing system). Alternatively, one or more methods can be implemented in hardware (logic gates, etc.), or in a combination of hardware and software. Example hardware can be programmable processors (e.g. Field-Programmable Gate Array (FPGA), Complex Programmable Logic Device), general purpose processors, graphics processors, Application Specific Integrated Circuits (ASICs), and the like. One or more methods can be performed as part of or component of an application running on the system, or as an application or software running in conjunction with other applications and operating system.

Although the description has been described with respect to particular implementations thereof, these particular implementations are merely illustrative, and not restrictive. Concepts illustrated in the examples may be applied to other examples and implementations.

In situations in which certain implementations discussed herein may collect or use personal information about users (e.g., user data, such as speech data and other data, information about a user's social network, user's location and time at the location, user's biometric information, user's activities and demographic information), users are provided with one or more opportunities to control whether information is collected, whether the personal information is stored, whether the personal information is used, and how the information is collected about the user, stored and used. That is, the systems and methods discussed herein collect, store and/or use user personal information specifically upon receiving explicit authorization from the relevant users to do so. For example, a user is provided with control over whether programs or features collect user information about that particular user or other users relevant to the program or feature. Each user for which personal information is to be collected is presented with one or more options to allow control over the information collection relevant to that user, to provide permission or authorization as to whether the information is collected and as to which portions of the information are to be collected. For example, users can be provided with one or more such control options over a communication network. In addition, certain data may be treated in one or more ways before it is stored or used so that personally identifiable information is removed. As one example, a user's identity may be treated so that no personally identifiable information can be determined. As another example, a user device's geographic location may be generalized to a larger region so that the user's particular location cannot be determined.

Note that the functional blocks, operations, features, methods, devices, and systems described in the present disclosure may be integrated or divided into different combinations of systems, devices, and functional blocks as would be known to those skilled in the art. Any suitable programming language and programming techniques may be used to implement the routines of particular implementations. Different programming techniques may be employed, e.g., procedural or object-oriented. The routines may execute on a single processing device or multiple processors. Although the steps, operations, or computations may be presented in a specific order, the order may be changed in different particular implementations. In some implementations, multiple steps or operations shown as sequential in this specification may be performed at the same time.

## Claims

1. A computer-implemented method comprising:
receiving, by a receiving device, speech data over a communication link from a transmitting device, wherein the speech data is processed by one or more components of the transmitting device or the communication link;
determining a quality of the speech data using a speech quality predictor implemented on the receiving device;
in response to determining that the quality of the speech data is above a threshold quality, providing noise suppression for the speech data using a noise suppressor implemented on the receiving device;
in response to determining that the quality of the speech data is below the threshold quality, omitting the noise suppression for the speech data by the receiving device; and
outputting the speech data by the receiving device;
wherein higher speech quality indicates less noise and/or other distortion present in the speech data and lower speech quality indicates more noise and/or other distortion present in the speech data.

2. The computer-implemented method of claim 1, further comprising determining an amount of noise in the speech data using a noise detector implemented on the receiving device,
wherein providing the noise suppression for the speech data is performed in response to the amount of noise being above a noise threshold.

3. The computer-implemented method of claim 2, further comprising, in response to determining that the quality of the speech data is above the threshold quality:
in response to the amount of noise being below the noise threshold, omitting the noise suppression for the speech data by the receiving device.

4. The computer-implemented method of any preceding claim, wherein determining the quality of the speech data includes determining a speech quality rating of the speech data, wherein the speech quality rating is one of a plurality of ratings in a scale of ratings.

5. The computer-implemented method of any preceding claim, wherein the speech quality predictor is implemented by a first machine learning model that executes on the receiving device, and/or wherein the speech quality predictor is implemented by a statistical or rule-based speech quality predictor.

6. The computer-implemented method of any preceding claim, wherein the noise suppressor is implemented by a second machine learning model that executes on the receiving device.

7. The computer-implemented method of any preceding claim, wherein the one or more components of the transmitting device or the communication link includes at least one of a noise suppressor machine learning model implemented by the transmitting device, gain control circuit, echo cancellation circuit, or codec.

8. The computer-implemented method of any preceding claim, wherein the one or more components of the transmitting device or the communication link perform at least one of: jitter concealment, packet loss concealment, or stretching of one or more speech data segments.

9. The computer-implemented method of any preceding claim, wherein the communication link is part of a communication network connected to the transmitting device and to the receiving device.

10. The computer-implemented method of any preceding claim, wherein outputting the speech data includes converting the speech data to an audio signal output by the receiving device, or outputting the speech data includes outputting the speech data to a device over a communication network.

11. A receiving device comprising:
a processor; and
a memory coupled to the processor, with instructions stored thereon that, when executed by the processor, cause the processor to perform operations comprising the method of any one of claims 1 to 5 or claims 8 to 10.

12. The receiving device of claim 11, wherein the speech quality predictor is implemented by a first machine learning model that executes on the receiving device, and/or wherein the noise suppressor is implemented by a second machine learning model that executes on the receiving device, and/or wherein the one or more components of the transmitting device or the communication link include at least one of: a noise suppressor machine learning model implemented by the transmitting device, a gain control circuit, an echo cancellation circuit, or a codec.

13. The receiving device of any one of claims 11 to 12, wherein the operation of outputting the speech data includes one of:
converting the speech data to an audio signal output by the receiving device; or
outputting the speech data to a second device over a communication network.

14. The receiving device of any one of claims 11 to 13, further comprising:
at least one battery; and
a communication circuit coupled to the battery;
wherein the processor is coupled to the battery.

## Patentansprüche

1. Computerimplementiertes Verfahren, umfassend:
Empfangen, durch eine Empfangsvorrichtung, von Sprachdaten über eine Kommunikationsverbindung von einer Sendevorrichtung, wobei die Sprachdaten durch eine oder mehrere Komponenten der Sendevorrichtung oder der Kommunikationsverbindung verarbeitet werden;
Bestimmen einer Qualität der Sprachdaten unter Verwendung eines Sprachqualitätsprädiktors, der auf der Empfangsvorrichtung implementiert ist;
als Reaktion auf das Bestimmen, dass die Qualität der Sprachdaten über einer Schwellenwertqualität liegt,
Bereitstellen einer Rauschunterdrückung für die Sprachdaten unter Verwendung eines Rauschunterdrückers, der auf der Empfangsvorrichtung implementiert ist;
als Reaktion auf das Bestimmen, dass die Qualität der Sprachdaten unter der Schwellenwertqualität liegt, Unterlassen der Rauschunterdrückung für die Sprachdaten durch die Empfangsvorrichtung; und
Ausgeben der Sprachdaten durch die Empfangsvorrichtung;
wobei eine höhere Sprachqualität weniger Rauschen und/oder andere Verzerrungen angibt, die in den Sprachdaten vorhanden sind, und eine niedrigere Sprachqualität mehr Rauschen und/oder andere Verzerrungen angibt, die in den Sprachdaten vorhanden sind.

2. Computerimplementiertes Verfahren nach Anspruch 1, ferner umfassend das Bestimmen einer Rauschmenge in den Sprachdaten unter Verwendung eines Rauschdetektors, der auf der Empfangsvorrichtung implementiert ist,
wobei das Bereitstellen der Rauschunterdrückung für die Sprachdaten als Reaktion darauf durchgeführt wird, dass die Rauschmenge über einem Rauschschwellenwert liegt.

3. Computerimplementiertes Verfahren nach Anspruch 2, ferner umfassend, als Reaktion auf das Bestimmen, dass die Qualität der Sprachdaten über der Schwellenwertqualität liegt:
als Reaktion darauf, dass die Rauschmenge unter dem Rauschschwellenwert liegt, Unterlassen der Rauschunterdrückung für die Sprachdaten durch die Empfangsvorrichtung.

4. Computerimplementiertes Verfahren nach einem der vorhergehenden Ansprüche, wobei das Bestimmen der Qualität der Sprachdaten das Bestimmen einer Sprachqualitätsbewertung der Sprachdaten beinhaltet, wobei die Sprachqualitätsbewertung eine einer Vielzahl von Bewertungen in einer Bewertungsskala ist.

5. Computerimplementiertes Verfahren nach einem der vorhergehenden Ansprüche, wobei der Sprachqualitätsprädiktor durch ein erstes maschinelles Lernmodell implementiert wird, das auf der Empfangsvorrichtung ausgeführt wird, und/oder wobei der Sprachqualitätsprädiktor durch einen statistischen oder regelbasierten Sprachqualitätsprädiktor implementiert wird.

6. Computerimplementiertes Verfahren nach einem der vorhergehenden Ansprüche, wobei der Rauschunterdrücker durch ein zweites maschinelles Lernmodell implementiert wird, das auf der Empfangsvorrichtung ausgeführt wird.

7. Computerimplementiertes Verfahren nach einem der vorhergehenden Ansprüche, wobei die eine oder die mehreren Komponenten der Sendevorrichtung oder der Kommunikationsverbindung mindestens eines beinhalten von einem maschinellen Lernmodell zur Rauschunterdrückung, das durch die Sendevorrichtung implementiert wird, einer Verstärkungsregelungsschaltung, einer Echokompensationsschaltung oder einem Codec.

8. Computerimplementiertes Verfahren nach einem der vorhergehenden Ansprüche, wobei die eine oder die mehreren Komponenten der Sendevorrichtung oder der Kommunikationsverbindung mindestens eines durchführen von: Jitter-Verdeckung, Paketverlustverdeckung oder Streckung eines oder mehrerer Sprachdatensegmente.

9. Computerimplementiertes Verfahren nach einem der vorhergehenden Ansprüche, wobei die Kommunikationsverbindung Teil eines Kommunikationsnetzwerks ist, das mit der Sendevorrichtung und mit der Empfangsvorrichtung verbunden ist.

10. Computerimplementiertes Verfahren nach einem der vorhergehenden Ansprüche, wobei das Ausgeben der Sprachdaten das Umwandeln der Sprachdaten in ein Audiosignal, das durch die Empfangsvorrichtung ausgegeben wird, beinhaltet, oder das Ausgeben der Sprachdaten das Ausgeben der Sprachdaten an eine Vorrichtung über ein Kommunikationsnetzwerk beinhaltet.

11. Empfangsvorrichtung, umfassend:
einen Prozessor; und
einen Speicher, der mit dem Prozessor gekoppelt ist, mit darauf gespeicherten Anweisungen, die, wenn sie durch den Prozessor ausgeführt werden, den Prozessor veranlassen, Operationen durchzuführen, die das Verfahren nach einem der Ansprüche 1 bis 5 oder der Ansprüche 8 bis 10 umfassen.

12. Empfangsvorrichtung nach Anspruch 11, wobei der Sprachqualitätsprädiktor durch ein erstes maschinelles Lernmodell implementiert wird, das auf der Empfangsvorrichtung ausgeführt wird, und/oder wobei der Rauschunterdrücker durch ein zweites maschinelles Lernmodell implementiert wird, das auf der Empfangsvorrichtung ausgeführt wird, und/oder wobei die eine oder die mehreren Komponenten der Sendevorrichtung oder der Kommunikationsverbindung mindestens eines beinhalten von: einem maschinellen Lernmodell zur Rauschunterdrückung, das durch die Sendevorrichtung implementiert wird, einer Verstärkungsregelungsschaltung, einer Echokompensationsschaltung oder einem Codec.

13. Empfangsvorrichtung nach einem der Ansprüche 11 bis 12, wobei die Operation des Ausgebens der Sprachdaten eines beinhaltet von:
Umwandeln der Sprachdaten in ein Audiosignal, das durch die Empfangsvorrichtung ausgegeben wird; oder
Ausgeben der Sprachdaten an eine zweite Vorrichtung über ein Kommunikationsnetzwerk.

14. Empfangsvorrichtung nach einem der Ansprüche 11 bis 13, ferner umfassend:
mindestens eine Batterie; und
eine Kommunikationsschaltung, die mit der Batterie gekoppelt ist;
wobei der Prozessor mit der Batterie gekoppelt ist.

## Revendications

1. Procédé mis en œuvre par ordinateur comprenant :
la réception, par un dispositif de réception, de données vocales via une liaison de communication en provenance d'un dispositif de transmission, dans lequel les données vocales sont traitées par un ou plusieurs composants du dispositif de transmission ou de la liaison de communication ;
la détermination d'une qualité des données vocales à l'aide d'un prédicteur de qualité vocale mis en œuvre sur le dispositif de réception ;
en réponse à la détermination selon laquelle la qualité des données vocales est supérieure à un seuil de qualité, la fourniture d'une suppression de bruit pour les données vocales à l'aide d'un suppresseur de bruit mis en œuvre sur le dispositif de réception ;
en réponse à la détermination selon laquelle la qualité des données vocales est inférieure au seuil de qualité, l'omission de la suppression de bruit pour les données vocales par le dispositif de réception ; et
la sortie des données vocales par le dispositif de réception ;
dans lequel une meilleure qualité vocale indique moins de bruit et/ou d'autres distorsions présentes dans les données vocales et une moins bonne qualité vocale indique plus de bruit et/ou d'autres distorsions présentes dans les données vocales.

2. Procédé mis en œuvre par ordinateur selon la revendication 1, comprenant également la détermination d'une quantité de bruit dans les données vocales à l'aide d'un détecteur de bruit mis en œuvre sur le dispositif de réception,
dans lequel la fourniture de la suppression de bruit pour les données vocales est effectuée en réponse au niveau de bruit étant supérieur à un seuil de bruit.

3. Procédé mis en œuvre par ordinateur selon la revendication 2, comprenant également, en réponse à la détermination selon laquelle la qualité des données vocales est supérieure au seuil de qualité :
en réponse à la quantité de bruit étant inférieure au seuil de bruit, l'omission de la suppression de bruit pour les données vocales par le dispositif de réception.

4. Procédé mis en œuvre par ordinateur selon une quelconque revendication précédente, dans lequel la détermination de la qualité des données vocales comporte la détermination d'une évaluation de la qualité vocale des données vocales, dans lequel l'évaluation de la qualité vocale est l'une d'une pluralité d'évaluations sur une échelle d'évaluations.

5. Procédé mis en œuvre par ordinateur selon une quelconque revendication précédente, dans lequel le prédicteur de qualité de parole est mis en œuvre par un premier modèle d'apprentissage automatique qui s'exécute sur le dispositif de réception, et/ou dans lequel le prédicteur de qualité de parole est mis en œuvre par un prédicteur de qualité de parole statistique ou basé sur des règles.

6. Procédé mis en œuvre par ordinateur selon une quelconque revendication précédente, dans lequel le suppresseur de bruit est mis en œuvre par un second modèle d'apprentissage automatique qui s'exécute sur le dispositif de réception.

7. Procédé mis en œuvre par ordinateur selon une quelconque revendication précédente, dans lequel les un ou plusieurs composants du dispositif de transmission ou de la liaison de communication comportent au moins l'un d'un modèle d'apprentissage automatique de suppression de bruit mis en œuvre par le dispositif de transmission, d'un circuit de commande de gain, d'un circuit d'annulation d'écho, ou d'un codec.

8. Procédé mis en œuvre par ordinateur selon une quelconque revendication précédente, dans lequel les un ou plusieurs composants du dispositif de transmission ou de la liaison de communication effectuent au moins une opération parmi la dissimulation de la gigue, la dissimulation de la perte de paquets, ou l'étirement d'un ou plusieurs segments de données vocales.

9. Procédé mis en œuvre par ordinateur selon une quelconque revendication précédente, dans lequel la liaison de communication fait partie d'un réseau de communication connecté au dispositif de transmission et au dispositif de réception.

10. Procédé mis en œuvre par ordinateur selon une quelconque revendication précédente, dans lequel la sortie des données vocales comporte la conversion des données vocales en un signal audio émis par le dispositif de réception, ou la sortie des données vocales comporte la sortie des données vocales vers un dispositif via un réseau de communication.

11. Dispositif de réception comprenant :
un processeur ; et
une mémoire couplée au processeur, sur laquelle sont stockées des instructions qui, lorsqu'elles sont exécutées par le processeur, amènent le processeur à réaliser des opérations comprenant le procédé selon l'une quelconque des revendications 1 à 5 ou des revendications 8 à 10.

12. Dispositif de réception selon la revendication 11, dans lequel le prédicteur de qualité vocale est mis en œuvre par un premier modèle d'apprentissage automatique qui s'exécute sur le dispositif de réception, et/ou dans lequel le suppresseur de bruit est mis en œuvre par un second modèle d'apprentissage automatique qui s'exécute sur le dispositif de réception, et/ou dans lequel les un ou plusieurs composants du dispositif de transmission ou de la liaison de communication comportent au moins l'un des éléments suivants : un modèle d'apprentissage automatique de suppression de bruit mis en œuvre par le dispositif de transmission, un circuit de commande de gain, un circuit d'annulation d'écho ou un codec.

13. Dispositif de réception selon l'une quelconque des revendications 11 à 12, dans lequel l'opération de sortie des données vocales comporte l'une des opérations suivantes :
la conversion des données vocales en un signal audio émis par le dispositif de réception ; ou
la sortie des données vocales vers un second dispositif via un réseau de communication.

14. Dispositif de réception selon l'une quelconque des revendications 11 à 13, comprenant également :
au moins une batterie ; et
un circuit de communication couplé à la batterie ;
dans lequel le processeur est couplé à la batterie.
